# EUROPÄISCHE PATENTSCHRIFT

(11) **EP 1 093 856 B1**
(45) Veröffentlichungstag und Bekanntmachung des Hinweises auf die Patenterteilung: **02.03.2005**
(21) Anmeldenummer: 99810957.3
(22) Anmeldetag: 21.10.1999
(51) Int. Cl.: B01L 3/02

(54) **Abgabe- bzw. Pipettiereinrichtung mit auswechselbarer Pipettenspitze**
Dispensing apparatus and pipetting system with interchangeable pipette tip
Tête dispensatrice et système de pipettage avec embout de pipette remplacable

(43) Veröffentlichungstag der Anmeldung: 25.04.2001
(73) Patentinhaber: Tecan Trading AG, 8708 Männedorf (CH)
(72) Erfinder: Hodac, Agathe, 8707 Uetikon am See (CH); Fornito, Stefano, 8614 Bertschikon (CH); Hälg, Werner, 8708 Männedorf (CH); Ingenhoven, Nikolaus, 8713 Uerikon (CH); Benedetti, Mario, 8330 Pfäffikon (CH)
(74) Vertreter: OK pat AG

(56) Entgegenhaltungen:
- EP-A- 0 187 167
- WO-A-90/14162
- WO-A-95/00392
- US-A- 5 763 278

## Beschreibung

### Technisches Gebiet

Die Erfindung betrifft, eine Abgabevorrichtung mit einer auswechselbaren Pipettenspitze sowie eine Pipettiereinrichtung. Derartige Teile und Geräte werden vor allem in chemischen, biologischen und medizinischen Laboratorien zum Pipettieren von Flüssigkeiten eingesetzt.

### Stand der Technik

Das System Genesis der TECAN AG umfasst eine Pipettiereinrichtung, welche mit gattungsgemässen auswechselbaren Pipettenspitzen aus Kunststoff betrieben werden kann, bei denen die Zuflussöffnung am hinteren Ende offen ist. Jede Pipettenspitze ist mittels eines Schlauchs, der durch ein Magnetventil geführt sein kann, mit einem Dilutor verbunden. Die Abgabe einer kleinen Flüssigkeitsmenge aus der Luft wird dann jeweils durch Betätigung des Magnetventils ausgelöst. Dieses System gestattet die Abgabe von Flüssigkeitsmengen zwischen 1 µl und 10 µl mit im allgemeinen ausreichender Genauigkeit.

Sollen jedoch noch kleinere Flüssigkeitsmengen - zwischen 1 nl und 1 µl - mit hoher Genauigkeit abgegeben werden, so genügt das beschriebene System den Anforderungen nicht in jedem Fall.

Eine gattungsgemäße Abgabevorrichtung wird in WO 9500392 beschrieben.

### Darstellung der Erfindung

Der Erfindung liegt die Aufgabe zu Grunde, eine Abgabevorrichtung mit einer auswechselbaren Pipettenspitze sowie eine Pipettiereinrichtung anzugeben, welche die Abgabe sehr kleiner Flüssigkeitsmengen - insbesondere im Bereich von 1 nl bis 1 µl - mit hoher Genauigkeit gestatten. Diese Aufgabe wird durch die Erfindung, wie sie in den Ansprüchen definiert ist, gelöst.

Die durch die Erfindung erzielten Vorteile liegen vor allem darin, dass auch sehr kleine Flüssigkeitsvolumina mit hoher Genauigkeit abgegeben werden können. Ausserdem können die Verschleppung von Probenflüssigkeit zwischen aufeinanderfolgenden Pipettiervorgängen und deren mögliche Folgen wie Verfälschung von Ergebnissen oder Verstopfen von Leitungen durch Klumpenbildung extrem gering gehalten werden, da die Pipettenspitzen dazwischen jeweils ausgewechselt werden können und direkte Berührung anderer Teile der Abgabevorrichtung mit der Probenflüssigkeit vermieden werden kann. Die Pipettenspitzen können sehr kostengünstig hergestellt werden, so dass ein häufiges Auswechseln derselben, was die Kosten betrifft, kaum ins Gewicht fällt. Auch die Abgabevorrichtung ist verhältnismässig billig herstellbar.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen Längsschnitt durch eine auswechselbare Pipettenspitze,
- Fig. 2: einen Längsschnitt durch eine erfindungsgemässe Abgabevorrichtung,
- Fig. 3: schematisch eine erfindungsgemässe Pipettiereinrichtung mit einer Abgabevorrichtung mit aufgesteckter auswechselbarer Pipettenspitze und
- Fig. 4: eine erfindungsgemässe Abgabevorrichtung mit einer auswechselbaren Pipettenspitze im Längsschnitt während verschiedener Stadien eines Pipettiervorgangs.

### Wege zur Ausführung der Erfindung

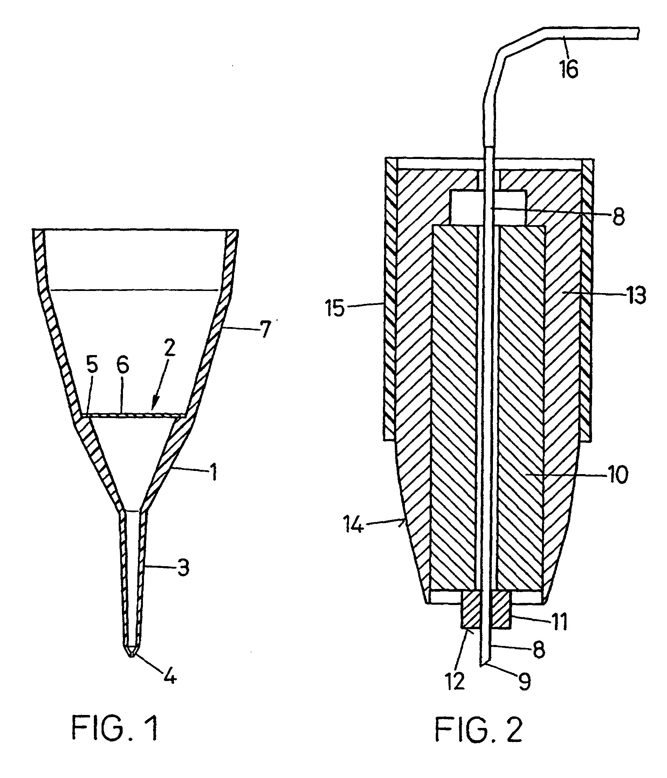

Die auswechselbare Pipettenspitze ist (Fig. 1) rotationssymmetrisch und umfasst eine verhältnismässig steife umlaufende Wand, welche einen weiteren Behälter 1 umfasst, welcher sich, ausgehend von einer Zuflussöffnung 2, trichterartig verengt und in ein engeres Ausflussrohr 3 übergeht, an dessen Ende eine Ausflussöffnung 4 angeordnet ist. Die Wand bildet ein die Zuflussöffnung 2 umgebendes umlaufendes Sims 5, mit dem der Rand einer flexiblen Membran 6 verbunden ist, welche die Zuflussöffnung 2 hermetisch verschliesst. Oberhalb des Simses 5 bildet die Wand einen sich erweiterenden umlaufenden Kragen 7.

Das Volumen des vom Behälter 1, dem Ausflussrohr 3 und der Membran 6 umschlossenen Hohlraums beträgt in der Regel zwischen 10 µl und 200 µl. Der Durchmesser der Ausflussöffnung liegt zwischen etwa 50 µm und 100 µm. Die Membran weist je nach Durchmesser und gewünschter Auslenkbarkeit eine Dicke von zwischen 200 µm und 500 µm auf, in der Regel ist die Dicke nicht grösser als 300 µm und liegt vorzugsweise bei etwa 250 µm.

Die Herstellung der auswechselbaren Pipettenspitze erfolgt vorzugsweise so, dass die umlaufende Wand - ohne Auslauföffnung - im Spritzgussverfahren hergestellt und durch Laserbohren mit der Auslauföffnung 4 versehen wird. Anschliessend wird die Membran 6 angebracht, indem ihr Rand mit dem Sims 5 z. B. ultraschallverschweisst wird. Die Pipettenspitze kann aus Polypropylen bestehen. Alternativ zum beschriebenen Verfahren kann die Wand mit einer grösseren Auslauföffnung im Spritzgussverfahren hergestellt und dieselbe dann durch Erwärmen und Ziehen des Auslaufrohres 3 auf den gewünschten Durchmesser verengt werden.

Die geschilderten Herstellverfahren sind einfach und gut automatisierbar, so dass der Preis der als Wegwerfspitze zum einmaligen Gebrauch gedachten Pipettenspitze sehr tief gehalten werden kann.

Die erfindungsgemässe Abgabevorrichtung (Fig. 2) umfasst eine Kanüle 8 mit einer lichten Weite von 0,5 mm oder weniger, welche an einem Vorderende schräg geschnitten ist und eine Kanülenspitze 9 bildet, während sie in der Nähe ihres Hinterendes eine Einschnürung aufweist. Die Kanüle 8 ist von einem rohrförmigen Aktuator 10 umgeben, der als Stapel von Piezoelementen ausgebildet und dessen Länge durch ein elektrisches Signal vorübergehend um zwischen 5 µm und 15 µm vergrössert werden kann. Im Bereich der Kanülenspitze 9 schliesst ein an der Kanüle 8 befestigter Uebertrager 11 an, der mit dem Ende des Aktuators 10 verbunden ist und die Kanüle 8 ringartig umgibt. Er bildet eine gegenüber der Kanülenspitze 9 etwas zurückgesetzte die Kanüle 8 umgebende kreisringförmige Stossfläche 12, die mittels des Aktuators 10 zusammen mit der Kanüle 8 parallel zur Achse derselben vorschiebbar und zurückziehbar ist.

Die Kanüle 8 und der Aktuator 10 sind in einem sie umgebenden Gehäuse 13 aus Messing oder Stahl verankert, das eine nach aussen weisende umlaufende Anlagefläche 14 bildet, die sich mit zunehmendem Abstand von einem etwa auf der Höhe des Uebertragers 11 liegenden Rand erweitert. Anschliessend an die Anlagefläche 14 ist das Gehäuse 13 von einem rohrförmigen Schieber 15 umgeben, welcher z. B. elektrisch angetrieben über die Anlagefläche 14 vorschiebbar und von ihr zurückziehbar ist. Das Hinterende der Kanüle 8 steht etwas über das Gehäuse 13 vor, so dass hier ein Verbindungsschlauch 16 angeschlossen werden kann. Die Abgabevorrichtung ist im wesentlichen rotationssymmetrisch.

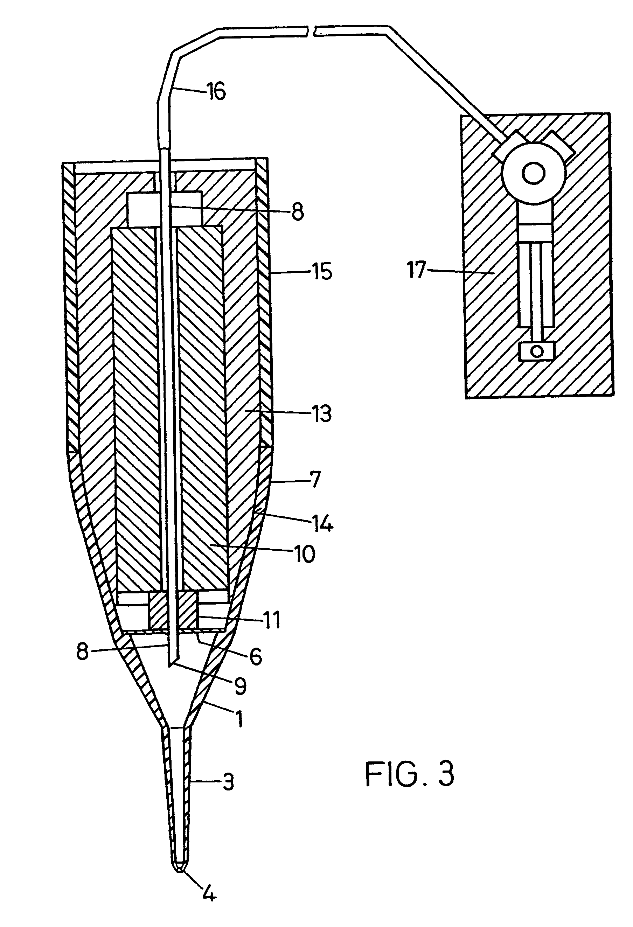

Die in Fig. 3 dargestellte Pipettiereinrichtung umfasst eine Abgabevorrichtung wie oben geschildert sowie einen Dilutor 17, der durch den Verbindungsschlauch 16 mit dem Hinterende der Kanüle 8 verbunden ist. Statt eines Dilutors kann auch eine andere Saugpumpe oder Druck- und Saugpumpe vorgesehen sein. In der Praxis umfasst eine Pipettiereinrichtung gewöhnlich mehrere jeweils mit einem Dilutor verbundene Abgabevorrichtungen, die gemeinsam an einem z. B. dreiachsig bewegbaren Robotarm befestigt sind. Im Bereich des Robotarms ist dann auch ein Gestell mit neuen Pipettenspitzen angeordnet sowie ein Abfallbehälter oder Gestell zur Aufnahme gebrauchter Pipettenspitzen.

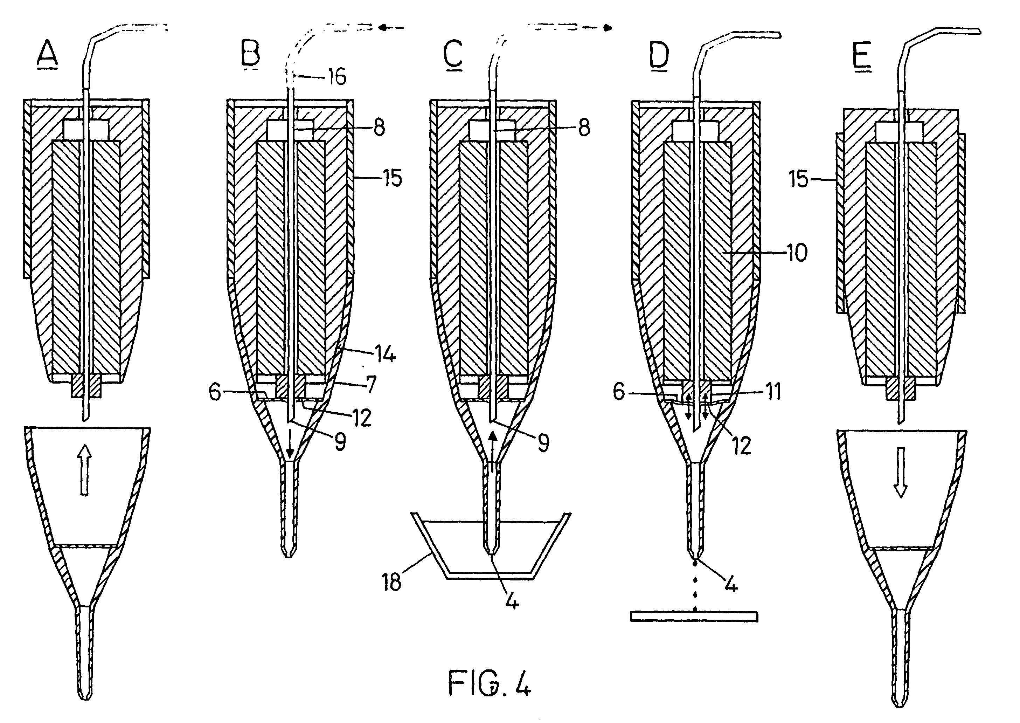

Das Pipettieren einer Flüssigkeitsprobe kann nun wie in Fig. 4 dargestellt ablaufen. Zuerst wird die Abgabevorrichtung zu einem Gestell mit neuen auswechselbaren Pipettenspitzen geführt und eine Pipettenspitze aufgenommen, indem die Abgabevorrichtung über dieselbe gebracht (A) und dann abgesenkt wird, bis die Kanülenspitze 9 die Membran 6 durchstösst und die Stossfläche 12 an der Oberseite derselben anliegt. Der Kragen 7 wird dabei durch die Anlagefläche 14 leicht elastisch gedehnt. Seine Innenfläche legt sich fest an diese an, so dass die Pipettenspitze zuverlässig an der Abgabevorrichtung festsitzt. Der Rand des Kragens 7 stösst an den unteren Rand des Schiebers 15. Anschliessend wird die Pipettenspitze mittels des Dilutors 17 (Fig. 3) über den Verbindungsschlauch 16 und die Kanüle 8 mit inerter Trägerflüssigkeit, z. B. destilliertem Wasser, gefüllt (Fig. 4, B).

Dann wird die Abgabevorrichtung über ein Vorratsgefäss 18 mit der zu pipettierenden Probenflüssigkeit gebracht und abgesenkt, bis die Ausflussöffnung 4 der Pipettenspitze eintaucht. Anschliessend wird, wiederum mittels des Dilutors 17 (Fig. 3) eine ausreichende Menge der Probenflüssigkeit in den Hohlraum der Pipettenspitze gesaugt. Ihr Spiegel sollte dabei unterhalb der Kanülenspitze 9 bleiben (Fig. 4, C), so dass keine direkte Berührung der Kanüle 8 mit der Probenflüssigkeit eintritt. Eine Verunreinigung der Kanüle 8 ist dann höchstens bei Vermischung der Probenflüssigkeit mit der Trägerflüssigkeit in ganz geringem, normalerweise völlig vernachläsigbarem Ausmass möglich. Verschleppung zwischen zwei aufeinanderfolgenden Pipettiervorgängen und ihre möglichen Konsequenzen wie Verfälschung von Resultaten oder Verstopfen von Leitungen durch Klumpenbildung ist fast vollständig ausgeschlossen.

Es folgt nun (D) die tropfenweise Abgabe der Probenflüssigkeit auf Reagenzien o. dgl. aus der Luft. Zur Abgabe eines Tropfens wird jeweils mittels eines elektrischen Impulses der Aktuator 10 der Abgabevorrichtung kurzzeitig gestreckt, so dass der Uebertrager 11 mit der Kanüle 8 vorgeschoben wird. Die Stossfläche 12 biegt dann die flexible Membran 6 durch, so dass sich das Volumen des Hohlraumes in der Pipettenspitze kurzzeitig verringert und ein Tropfen der Probenflüssigkeit durch die Ausflussöffnung 4 ausgestossen wird. Der Hohlraum der Pipettenspitze wirkt dabei als Pumpkammer. Das Volumen des ausgestossenen Tropfens kann durch Grösse und Form des Signals gesteuert werden. Durch die Genauigkeit, mit der diese Steuerung möglich ist und den Umstand, dass die Einwirkung auf die Trägerflüssigkeit unmittelbar an der Pipettenspitze selbst erfolgt, ist das ausgestossene Volumen auch bei kleinsten Mengen - in der Regel liegt das Tropfenvolumen zwischen 1 nl und 1 µl - sehr genau einstellbar. Natürlich können auch mehrere Tropfen hintereinander ausgestossen werden, wobei die Rate der Flüssigkeitsabgabe auch durch die Frequenz der Signale beeinflusst wird.

Nach Beendigung der Abgabe wird die Abgabevorrichtung z. B. über einen Abfallbehälter gebracht und die Pipettenspitze durch Vorschieben des Schiebers 15 abgestossen (E). Der beschriebene die Stadien A bis E umfassende Vorgang kann beliebig wiederholt werden.

Es sind natürlich verschiedene Abweichungen vom geschilderten Ausführungsbeipiel möglich, ohne dass der Rahmen der Erfindung verlassen würde. So kann z. B. auch ein magnetischer oder pneumatischer Aktuator vorgesehen werden. Die Pipettenspitzen können mit Trägerflüssigkeit vorgefüllt sein, in welchem Fall Stadium B des Pipettiervorgangs entfällt.

### Bezugszeichenliste

- 1: Behälter
- 2: Zuflussöffnung
- 3: Ausflussrohr
- 4: Ausflussöffnung
- 5: Sims
- 6: Membran
- 7: Kragen
- 8: Kanüle
- 9: Kanülenspitze
- 10: Aktuator
- 11: Uebertrager
- 12: Stossfläche
- 13: Gehäuse
- 14: Anlagefläche
- 15: Schieber
- 16: Verbindungsschlauch
- 17: Dilutor
- 18: Vorratsgefäss

## Patentansprüche

1. Vorrichtung zum Abgeben flüssiger Proben, welche eine auswechselbare Pipettenspitze mit einer steifen umlaufenden Wand umfasst, wobei die Wand einen Hohlraum umgibt und von einer Ausflussöffnung (4) und einer von derselben beabstandeten grösseren Zuflussöffnung (2) unterbrochen ist, wobei die Zuflussöffnung (2) von einer flexiblen Membran (6) bedeckt ist, **dadurch gekennzeichnet, dass** die Vorrichtung umfasst:
• eine Kanüle (8) mit einer Kanülenspitze (9), die die flexible Membran durchstösst;
• eine in der Nähe der Kanülenspitze angeordnete, gegenüber derselben etwas zurückgesetzte Stossfläche (12);
• einen Aktuator (10), mittels dessen die Stossfläche (12) im wesentlichen parallel zur Achse der Kanüle (8) vorschieb- und zurückziehbar ist.

2. Abgabevorrichtung gemäss Anspruch 1, **dadurch gekennzeichnet, dass** die Stossfläche (12) an der Oberseite der flexiblen Membran (6) anliegt.

3. Abgabevorrichtung gemäss Anspruch 1 oder 2, **dadurch gekennzeichnet, dass** die Wand einen an die Zuflussöffnung (2) anschliessenden weiteren Behälter (1) bildet sowie ein an diesen anschliessendes engeres Ausflussrohr (3), an dessen Ende die Ausflussöffnung (4) angeordnet ist.

4. Abgabevorrichtung gemäss einem der vorhergehenden Ansprüche, **dadurch gekennzeichnet, dass** sich der Behälter (1) von der Zuflussöffnung (2) zum Ansatz des Ausflussrohres (3) hin stetig verengt.

5. Abgabevorrichtung gemäss einem der vorhergehenden Ansprüche, **dadurch gekennzeichnet, dass** die Wand einen über den Rand der Zuflussöffnung (2) überstehenden Kragen (7) umfasst.

6. Abgabevorrichtung gemäss einem der vorhergehenden Ansprüche, **dadurch gekennzeichnet, dass** sie bezüglich einer durch die Ausflussöffnung (4) und die Zuflussöffnung (2) verlaufenden Achse rotationssymmetrisch ist.

7. Abgabevorrichtung gemäss einem der vorhergehenden Ansprüche, **dadurch gekennzeichnet, dass** das Volumen des Hohlraums höchstens 200 µl beträgt.

8. Abgabevorrichtung gemäss einem der vorhergehenden Ansprüche, **dadurch gekennzeichnet, dass** der Durchmesser der Ausflussöffnung (4) zwischen 50 µm und 100 µm beträgt.

9. Abgabevorrichtung gemäss einem der vorhergehenden Ansprüche, **dadurch gekennzeichnet, dass** die Dicke der Membran (6) zwischen 200 µm und 500 µm, vorzugsweise zwischen 200 µm und 300 µm liegt.

10. Abgabevorrichtung gemäss einem der vorhergehenden Ansprüche, **dadurch gekennzeichnet, dass** die Pipettenspitze im wesentlichen aus Polypropylen besteht, die Wand im Spritzgussverfahren hergestellt und die Membran (6) durch Ultraschallschweissen mit derselben verbunden ist.

11. Abgabevorrichtung gemäss einem der vorhergehenden Ansprüche, **dadurch gekennzeichnet, dass** der Aktuator (10) die Kanüle (8) umgibt.

12. Abgabevorrichtung gemäss einem der vorhergehenden Ansprüche, **dadurch gekennzeichnet, dass** die Stossfläche (12) die Frontfläche eines Übertragers (11) bildet, welcher am Aktuator (10) abgestützt ist.

13. Abgabevorrichtung gemäss einem der vorhergehenden Ansprüche, **dadurch gekennzeichnet, dass** der Übertrager (11) mit der Kanüle (8) verbunden ist.

14. Abgabevorrichtung gemäss einem der vorhergehenden Ansprüche, **dadurch gekennzeichnet, dass** der Aktuator (10) mindestens ein Piezoelement enthält.

15. Abgabevorrichtung gemäss einem der vorhergehenden Ansprüche, **dadurch gekennzeichnet, dass** sie ein die Kanüle (8) und den Aktuator (10) umgebendes Gehäuse (13) umfasst, welches eine nach aussen weisende Anlagefläche (14) bildet.

16. Abgabevorrichtung gemäss Anspruch 15, **dadurch gekennzeichnet, dass** sie einen Schieber (15) umfasst, welcher über mindestens einen Teil der Anlagefläche (14) vorschiebbar und zurückziehbar ist.

17. Pipettiereinrichtung zum Aufnehmen und Abgeben flüssiger Proben, die eine Saugpumpe umfasst und **dadurch gekennzeichnet ist, dass** sie eine Abgabevorrichtung gemäss einem der Ansprüche 1 bis 16 umfasst sowie. einen Verbindungsschlauch (16), welcher das Hinterende der Kanüle (8) mit der Saugpumpe verbindet.

18. Abgabeeinrichtung zum Abgeben flüssiger Proben, die eine Saugpumpe umfasst und **dadurch gekennzeichnet ist, dass** sie eine Abgabevorrichtung gemäss einem der Ansprüche 1 bis 16 umfasst sowie einen Verbindungsschlauch (16), welcher das Hinterende der Kanüle (8) mit der Saugpumpe verbindet.

19. Pipettiereinrichtung oder Abgabeeinrichtung gemäss einem der Ansprüche 17 oder 18, **dadurch gekennzeichnet, dass** die Saugpumpe als Dilutor (17) ausgebildet ist.

## Claims

1. Device for dispensing fluid samples including an interchangeable pipette tip with a rigid circumferential wall, the wall enclosing a hollow space and being interrupted by a delivery opening (4) and in some distance from the latter a larger inlet opening (2), the inlet opening (2) being covered by a flexible membrane (6), **characterized in that** the device includes:
• a canula (8) with a canula tip (9) that pierces the flexible membrane;
• a contact face (12) near and set back somewhat from the canula tip;
• an actuator (10), by means of which the contact face (12) can be moved back and forth in a direction parallel to the axis of the canula (8).

2. Device for dispensing fluid samples according to Claim 1, **characterized in that** the contact face (12) lies in contact with the upper side of the flexible membrane (6).

3. Device for dispensing fluid samples according to Claim 1 or 2, **characterized in that** the wall forms a supplementary container (1) communicating with the inlet opening (2) and also prolonged by a narrower outlet tube (3) at the end of which the delivery opening (4) is located.

4. Device for dispensing fluid samples according to one of the above Claims, **characterized in that** the container (1) tapers continuously from the inlet opening (2) to the start of the outlet tube (3)

5. Device for dispensing fluid samples according to one of the above Claims, **characterized in that** the wall possesses a collar (7) extending above the edge of the inlet opening (2).

6. Device for dispensing fluid samples according to one of the above Claims, **characterized in that** it displays rotational symmetry about an axis running through the delivery opening (4) and the inlet opening (2).

7. Device for dispensing fluid samples according to one of the above Claims, **characterized in that** the maximum volume of the hollow space is 200 µl.

8. Device for dispensing fluid samples according to one of the above Claims, **characterized in that** the diameter of the delivery opening (4) is between 50 µm and 100 µm.

9. Device for dispensing fluid samples according to one of the above Claims, **characterized in that** the thickness of the membrane (6) is between 200 µm and 500 µm, preferably between 200 µm and 300 µm.

10. Device for dispensing fluid samples according to one of the above Claims, **characterized in that** the pipette tip is made principally of polypropylene, the wall is manufactured by injection moulding and the membrane (6) is fixed to the latter by ultrasonic welding.

11. Device for dispensing fluid samples according to one of the above Claims, **characterized in that** the actuator (10) surrounds the canula (8).

12. Device for dispensing fluid samples according to one of the above Claims, **characterized in that** the contact face (12) forms the front face of a transmitting piece (11) bearing against the actuator (10).

13. Device for dispensing fluid samples according to one of the above Claims, **characterized in that** the transmitting piece (11) is connected to the canula (8).

14. Device for dispensing fluid samples according to one of the above Claims, **characterized in that** the actuator (10) contains at least one piezoelectric component.

15. Device for dispensing fluid samples according to one of the above Claims, **characterized in that** it includes a housing (13) surrounding the canula (8) and the actuator (10) and forming an outward-facing bearing surface (14).

16. Device for dispensing fluid samples according to Claim 15, **characterized in that** it includes a slider (15) which can be slid forward and back over at least a part of the outward-facing bearing surface (14).

17. Pipetting device for pipetting and dispensing fluid samples incorporating a suction pump and **characterized in that** it comprises a device for dispensing fluid samples according to one of Claims 1 to 16 and also a connecting hose (16) connecting the rear end of the canula (8) to the suction pump.

18. Dispensing device for dispensing fluid samples incorporating a suction pump and **characterized in that** it comprises a device for dispensing fluid samples according to one of Claims 1 to 16 and also a connecting hose (16) connecting the rear end of the canula (8) to the suction pump.

19. Pipetting or dispensing device according to one of Claims 17 or 18, **characterized in that** the suction pump is constructed as a diluter (17).

## Revendications

1. Dispositif pour dispenser des échantillons liquides, comprenant un embout de pipette remplaçable entouré d'une paroi rigide, dans lequel la paroi forme une cavité et est traversée par un orifice de sortie (4) et par un orifice d'entrée (2) se trouvant à distance de l'orifice de sortie (4) et ayant un diamètre supérieur à ce dernier, l'orifice d'entrée (2) étant recouvert d'une membrane flexible (6), **caractérisé en ce que** le dispositif comprend :
• une canule (8) avec un embout de canule (9), perçant la membrane flexible ;
• une surface d'about (12) disposée à proximité de l'embout de canule (9) et un peu en retrait de celui-ci ;
• un actuateur (10), au moyen duquel la surface d'about (12) peut être avancée et retirée principalement parallèlement à l'axe de la canule (8).

2. Dispositif dispensateur selon la revendication 1, **caractérisé en ce que** la surface d'about (12) est adjacente à la face supérieure de la membrane flexible (6).

3. Dispositif dispensateur selon la revendication 1 ou 2, **caractérisé en ce que** la paroi forme un autre réservoir (1) contigu à l'orifice d'entrée (2) et donnant sur un tuyau de sortie (3) plus étroit au bout duquel est disposé l'orifice de sortie (4).

4. Dispositif dispensateur selon l'une des revendications précédentes, **caractérisé en ce que** le réservoir (1) se resserre constamment depuis l'orifice d'entrée (2) jusqu'au début du tuyau de sortie (3).

5. Dispositif dispensateur selon l'une des revendications précédentes, **caractérisé en ce que** la paroi comprend un col (7) dépassant du rebord de l'orifice d'entrée (2).

6. Dispositif dispensateur selon l'une des revendications précédentes, **caractérisé en ce qu'**il présente une symétrie de révolution selon un axe traversant l'orifice de sortie (4) et l'orifice d'entrée (2).

7. Dispositif dispensateur selon l'une des revendications précédentes, **caractérisé en ce que** le volume de la cavité est au maximum de 200 µl.

8. Dispositif dispensateur selon l'une des revendications précédentes, **caractérisé en ce que** le diamètre de l'orifice de sortie (4) est compris entre 50 µm et 100 µm.

9. Dispositif dispensateur selon l'une des revendications précédentes, **caractérisé en ce que** l'épaisseur de la membrane (6) est comprise entre 200 µm et 500 µm, de préférence entre 200 µm et 300 µm.

10. Dispositif dispensateur selon l'une des revendications précédentes, **caractérisé en ce que** l'embout de pipette est essentiellement constitué de polypropylène, la paroi est fabriquée par moulage à injection et la membrane (6) est jointe à celle-ci par soudage ultrasonique.

11. Dispositif dispensateur selon l'une des revendications précédentes, **caractérisé en ce que** l'actuateur (10) entoure la canule (8).

12. Dispositif dispensateur selon l'une des revendications précédentes, **caractérisé en ce que** la surface d'about (12) forme la surface frontale d'un élément transmetteur (11), qui est accoté à l'actuateur (10).

13. Dispositif dispensateur selon l'une des revendications précédentes, **caractérisé en ce que** l'élément transmetteur (11) est relié à la canule (8).

14. Dispositif dispensateur selon l'une des revendications précédentes, **caractérisé en ce que** l'actuateur (10) possède au moins un piézoélément.

15. Dispositif dispensateur selon l'une des revendications précédentes, **caractérisé en ce qu'**il comprend un boîtier (13) entourant la canule (8) et l'actuateur (10), formant une face d'appui (14) tournée vers l'extérieur.

16. Dispositif dispensateur selon la revendication 15, **caractérisé en ce qu'**il comprend un coulisseau (15) qui peut être poussé ou tiré sur au moins une partie de la face d'appui (14).

17. Système de pipetage pour prélever et dispenser des échantillons liquides, comprenant une pompe aspirante et **caractérisé en ce qu'**il comprend un dispositif dispensateur selon l'une des revendications 1 à 16 ainsi qu'un tuyau de raccordement (16) reliant l'extrémité arrière de la canule (8) à la pompe aspirante.

18. Dispositif dispensateur pour dispenser des échantillons liquides, comprenant une pompe aspirante et **caractérisé en ce qu'**il comprend un dispositif dispensateur selon l'une des revendications 1 à 16 ainsi qu'un tuyau de raccordement (16) reliant l'extrémité arrière de la canule (8) à la pompe aspirante.

19. Système de pipetage ou dispositif dispensateur selon l'une des revendications 17 ou 18, **caractérisé en ce que** la pompe aspirante est conçue comme un appareil de dilution (17).
